Europäisches Patentamt

European Patent Office

Office européen des brevets

(11) Veröffentlichungsnummer: **0 139 164**
**B1**

(12) **EUROPÄISCHE PATENTSCHRIFT**

(45) Veröffentlichungstag der Patentschrift:
03.05.89

(21) Anmeldenummer: **84110043.1**

(22) Anmeldetag: **23.08.84**

(51) Int. Cl.⁴: **G 11 B 23/023**

(54) Aufbewahrungsbehälter für Kompaktkassetten.

(30) Priorität: **29.08.83 EP 83108473**

(43) Veröffentlichungstag der Anmeldung:
**02.05.85 Patentblatt 85/18**

(45) Bekanntmachung des Hinweises auf die Patenterteilung:
**03.05.89 Patentblatt 89/18**

(84) Benannte Vertragsstaaten:
**DE FR GB IT SE**

(56) Entgegenhaltungen:
**WO-A-83/00768**
**DE-A- 2 343 487**
**DE-A- 2 734 788**
**DE-C- 2 033 388**
**FR-A- 2 059 902**
**US-A- 4 216 857**

(73) Patentinhaber: **idn inventions and development of novelties ag, Hartbertstrasse 9, CH-7002 Chur (CH)**

(72) Erfinder: **Ackeret, Peter, Allmendstr. 18,
CH-8700 Küsnacht (CH)**

(74) Vertreter: **Dipl.-Ing. H. Marsch Dipl.-Ing. K. Sparing
Dipl.-Phys.Dr. W.H. Röhl Patentanwälte,
Rethelstrasse 123, D-4000 Düsseldorf 1 (DE)**

## Beschreibung

Die Erfindung betrifft einen Behälter zur Aufnahme von Kompaktkassetten mit den im Oberbegriff der unabhängigen Patentansprüche genannten Merkmalen. Ein solcher Behälter ist aus der DE-A-2 343 487 bekannt. Bei diesem bekannten Behälter liegen die Kassetten so im Behälter, daß ihr Kopfspiegel der Frontwand des Schiebers zugekehrt ist. Demgemäß sind die Behälter breiter als tief.

Derartige Behälter werden häufig in Kraftfahrzeugen eingebaut, vorzugsweise in Aussparungen von Konsolen oder Frontverkleidungen. Diese Aussparungen haben oft eine Tiefe, die viel größer ist als die Tiefe der Behälter, dafür jedoch geringere Höhe oder Breite. Es besteht deshalb ein Bedürfnis nach Behältern, die diese Tiefe ausnützen können.

Es ist bereits aus der DE-C-2 033 388 ein Kassettenmagazin bekannt, bei dem die Kassetten in einer Orientierung derart untergebracht sind, daß ihre Bandwickelnaben in Entnahmerichtung hintereinander liegen. Für jede Kassette ist ein Schlitz vorgesehen, in den eine Kassette einführbar ist. Dabei nimmt sie einen Winkel mit, an dem beweglich Sperrnocken angebracht sind, die beim Kasetteneinschub keilgeführt in die Bandwickelnaben einrasten. Die Kassette wird im Schlitz durch Klemmen gehalten und ragt ein Stück über die Magazinfront hinaus, damit sie erfaßt und herausgezogen werden kann.

Die WO-A-8 300 768 offenbart eine in ein Gehäuse einschiebbare Tragplatte für eine Mehrzahl von Minikassetten, wobei die Tragplatte von im Gehäuse angebrachten Schienen übergriffen ist. Um eine ganz innen liegende Minikassette entnehmen oder einlegen zu können, wird die gesamte Tragplatte aus dem Gehäuse herausgezogen, was die Handhabung in einem Kraftfahrzeug kompliziert.

Schließlich ist aus der US-A-4 216 857 ein Kompaktkassettenbehälter bekannt, der sich von dem zuerst genannten bekannten Behälter durch die Art der Verriegelung unterscheidet; eine bessere Ausnutzung der Nischentiefe ermöglicht er nicht.

Aufgabe der Erfindung ist es, einen gattungsgleichen Behälter zu schaffen, der es ermöglicht, die Nischentiefe beim Einbau in Kraftfahrzeuge gut auszunutzen und eine bequeme Bedienbarkeit durch den Lenker des Fahrzeugs gewährleistet.

Gemäß der Erfindung umfaßt der Schieberboden ein Mittelteil, auf dem die Nocken in Schieberbewegungsrichtung hintereinander angeordnet sind, und die Länge einer Schiebeführung und die Position der Anschläge sind derart bemessen, daß in der äußeren Endposition der gehäuseinnere Nocken vor der Gehäusestirnwand liegt. Des weiteren ist vorgesehen, daß der Schieberboden beidseits des Mittelteils je ein Seitenteil aufweist, die von dem Mittelteil durch Führungsschlitze getrennt sind und von denen eines mit einer Entriegelungstaste versehen ist. Diese Maßnahmen ermöglichen, daß der Schieber so weit aus dem Gehäuse ausfahren kann, daß die Handhabung der Kassette einfach ist, der Schieber ohne Verklemmen einschiebbar und selbsttätig verriegelbar ist.

Gemäß einem weiteren Aspekt der Erfindung ist zusätzlich vorgesehen, daß die Führungsmittel für den Schieber sich über die Schieberrückwand hinauserstrecken. Auch dieser Aspekt trägt dazu bei, ein Verklemmen beim Einschieben des Schiebers zu verhindern.

Gemäß einem weiteren Aspekt der Erfindung ist vorgesehen, daß das Schieberboden-Mittelteil sich in Ausschubrichtung des Schiebers erstreckende Versteifungsrippen aufweist. Dies macht den Schieber einerseits verwindungsfest, spart andererseits gegenüber einer massiven Ausführung Material, und zusätzlich wird Platz gewonnen, beispielsweise für Federabstütz- und/oder Stapelelemente.

Gemäß einem weiteren Aspekt der Erfindung ist vorgesehen, daß der Schieberboden zwei unterschiedliche Kassettenabstützniveaus definiert entsprechend dem dünneren und dem dickeren Teil der unterzubringenden Kassetten, so daß diese sicher aufliegen und nicht klappern.

Ausführungsbeispiele des Gegenstandes der Erfindung werden nachstehend unter Bezugnahme auf die beigefügten Zeichnungen im einzelnen erläutert.

Fig. 1 zeigt perspektivisch einen Kassettenbehälter gemäß der Erfindung, wobei der Schieber in der Kassettenentnahmeposition ist («Behälter offen»),

Fig. 1a ist eine perspektivische Teilansicht entsprechend Fig. 1 zur Erläuterung der Schieberführung,

Fig. 1b ist ein schematischer Querschnitt senkrecht zur Schieberbewegungsrichtung entsprechend Fig. 1,

Fig. 2 ist ein Schnitt in der Vertikalebene parallel zur Schieberausschubrichtung,

Fig. 3 ist eine Draufsicht auf den geöffneten Behälter,

Fig. 4 ist eine Frontansicht des geschlossenen Behälters,

Fig. 5 zeigt eine zweite Ausführungsform in einer Vertikalschnittdarstellung analog zu Fig. 2, wobei jedoch der Schnitt wie in Fig. 6 durch Linie 5–5 angedeutet versetzt ist,

Fig. 6 ist ein Horizontalschnitt durch den geschlossenen Behälter gemäß der zweiten Ausführungsform,

Fig. 7 ist eine Teilschnittdarstellung analog Fig. 6 bei geöffnetem Behälter, und

Fig. 8a bis 8d zeigen in perspektivischer Teildarstellung vier Varianten einer dritten Ausführungsform.

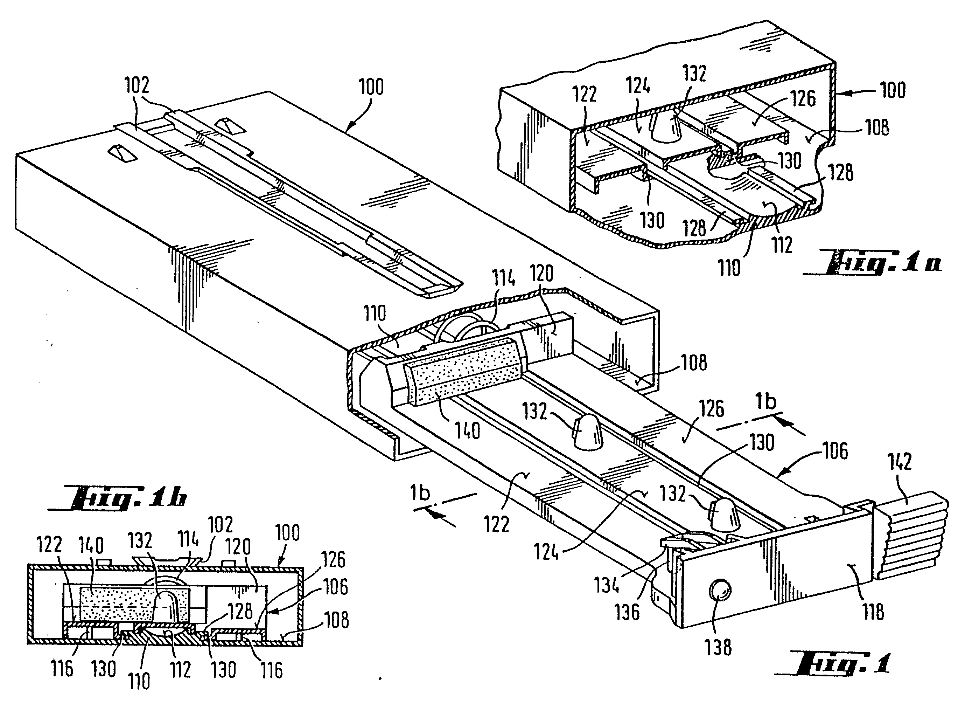

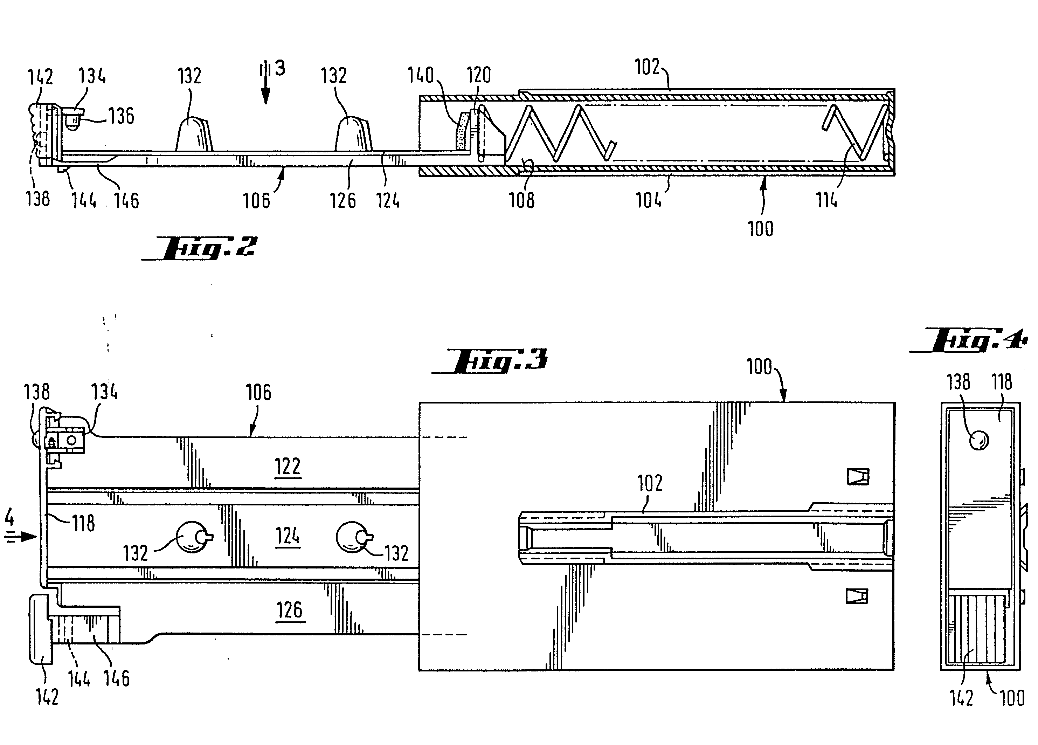

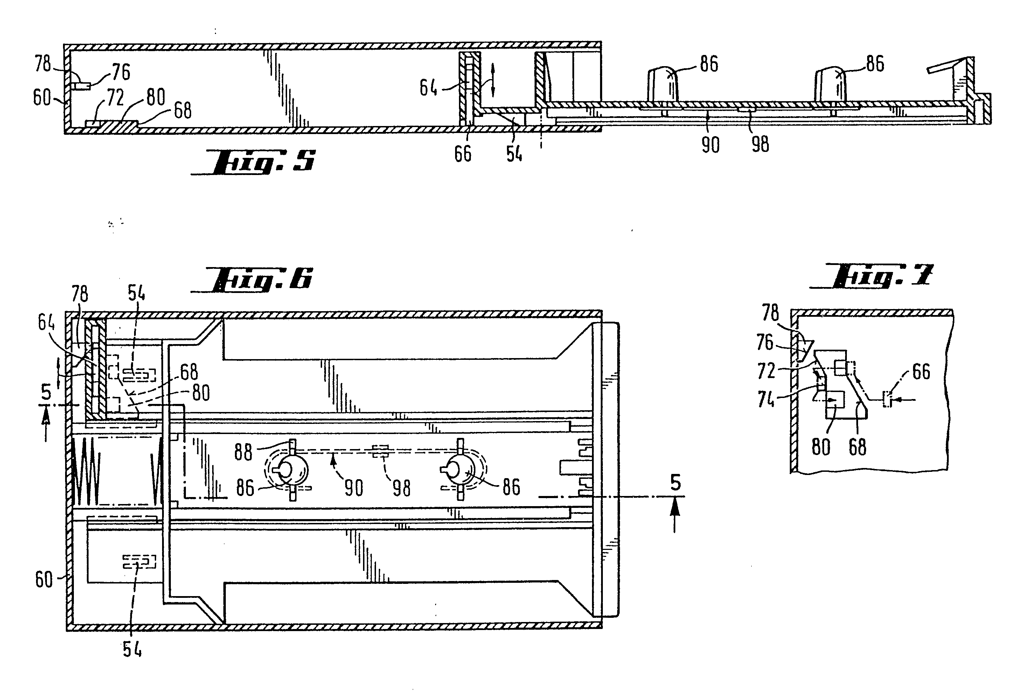

Die Figuren 1–4 beziehen sich auf eine erste Ausführungsform. Der Behälter umfaßt ein Gehäuse 100, auf dessen Ober- bzw. Unterseite zueinander komplementäre Stege 102 bzw. 104 vorgesehen sind, um aus mehreren gleichen Behältern Blöcke zusammenschieben zu können. Im Gehäuse 100 ist gleitbeweglich der Schieber 106 aufgenommen. An den Gehäuseboden 108 ist innen eine Schiene 110 angeformt, die in der Mitte eine im Querschnitt teilkreisförmige Kontur 112 besitzt, um eine Druckschraubenfeder 114 gegen Ausknikken abzustützen. In den Gehäuseboden 108 sind zwei zu der Schiene 110 parallele Schlitze eingebracht, in denen Anschläge laufen, welche an den Schieber unten angeformt sind und die den Ausschubweg des Schiebers begrenzen. – Diese Anschläge sind nur in der Fig. 1b angedeutet und mit 116 markiert.

Der Schieber umfaßt eine Frontwand 118 und eine Rückwand 120, die durch drei Bodenplattenteile 122, 124 und 126 miteinander verbunden sind. Zwischen diesen Bodenplattenteilen erstreckt sich jeweils ein Schlitz, der hinter der Frontwand 118 beginnt und hinter der Rückwand ausläuft. Die Schlitze haben einen zum seitlichen Profil der Schiene 110 komplementären Querschnitt, so daß deren seitlich auskragende Leisten 128 über die einwärts gerichteten Schenkel 130 der beiden äußeren Bodenplattenteile 122 bzw. 126 greifen. Wie am besten in Fig. 1a erkennbar, haben die Bodenplattenteile ein umgekehrt U-förmiges Profil, wodurch die Biegesteife des Schiebers verbessert wird. Wie man derselben Figur entnimmt, ist das Bodenplattenteil 122 höher als das mit 126 bezeichnete; damit wird der Tatsache Rechnung getragen, daß die meistverbreiteten Kompaktkassetten im Bereich ihres Kopfspiegels eine im Umriß trapezförmige Verdickung aufweisen, die dann auf dem niedrigeren Bodenplattenteil 126 aufliegt.

Die Sperrnocken 132 für die Bandwickelnaben sind ober am mittleren Bodenplattenteil 124 angeformt.

An der Frontwand 118 ist links in Fig. 1 ein kleiner Tasthebel 134 angelenkt, der einen Signalknopf 136 (Fig. 2) trägt; beim Einlegen einer Kompaktkassette wird der Tasthebel 134 gegen Federkraft nach unten verschwenkt, so daß der Signalknopf 136 in einem Fenster 138 erscheint. Auf diese Weise kann man bei einem gestapelten Behälterblock sofort von außen erkennen, welche Behälter belegt sind. – Zum Ausgleich von Abmessungstoleranzen der Kassetten und der Behälter ist an die Rückwand 120 des Schiebers ein Weichschaumstoffkissen 140 angeklebt, so daß der ja sehr kleine Tasthebel 134 mit Sicherheit betätigt wird und die Kassette im Behälter auch nicht klappern kann, etwa bei der Mitnahme im Kraftfahrzeug.

Ein Teil der Frontwand, rechts in Fig. 1, ist als Auslösetaste 142 für einen Verriegelungshaken 144 (Fig. 2) ausgebildet, der bei aufwärts gerichtetem Fingerdruck auf die Taste 142 aus dem mit ihm fluchtenden Schlitz im Gehäuseboden herausgehoben wird, so daß die Feder 114 den Schieber ausstoßen kann. Der Haken 144 sitzt an einer Blattfeder 146, die aus dem Bodenplattenteil 126 ausgeformt und relativ zu diesem nach oben auslenkbar ist.

Wie oben erwähnt, ist der Behälter gemäß den Figuren 1–4 so ausgebildet, daß es eine definierte Einlege-Orientierung der Kompaktkassette gibt; würde man versuchen, die Kassette mit ihrem Kopfspiegel nach der andern Seite einzulegen, ließe sich der Behälter nicht mehr schließen; dies nicht nur wegen der Kopfspiegelverdickung, sondern auch wegen der bei Kompaktkassetten vorgesehenen asymmetrischen Anordnung der Bandwickelnaben, die deshalb bei einem Behälter minimaler Breite auch nicht genau in der Mittelebene sitzen.

Die Ausführungsform nach Fig. 5–7 erlaubt es, die Kassette trotz dieser Unsymmetrien in beliebiger Orientierung einzulegen. Da der grundsätzliche Aufbau des Gehäuses und des Schiebers weitgehend mit dem ersten Ausführungsbeispiel übereinstimmen, werden hier nur die Unterschiede erläutert.

Die Bandwickel-Blockiernocken 86 ragen mit einem angeformten flachen Fuß jeweils in einen Querschlitz 88 des mittleren Bodenplattenteils, auf dessen Unterseite eine Drahtfeder 90 bei 98 in einen Clip eingesprengt ist, während ihre schlaufenartig gebogenen Enden die Nockenfüße umgreifen. Die Nocken sind demgemäß gegen Federvorspannung quer zur Schieberbewegungsrichtung um eine Strecke entsprechend der Länge der Schlitze 88 gegen die Vorspannung der Feder 90 verlagerbar.

Wird nun eine Kompaktkassette genau mit ihrer Mittellinie über die Nocken gehalten, so fluchten diese zwar nicht genau mit den Bandwickelnaben, doch gibt es eine gewisse Überdeckung, die ausreicht, daß beim Niederdrücken der Kassette die Nocken die erwähnte Querverlagerung ausführen können und dann die Bandwickelnaben blockieren.

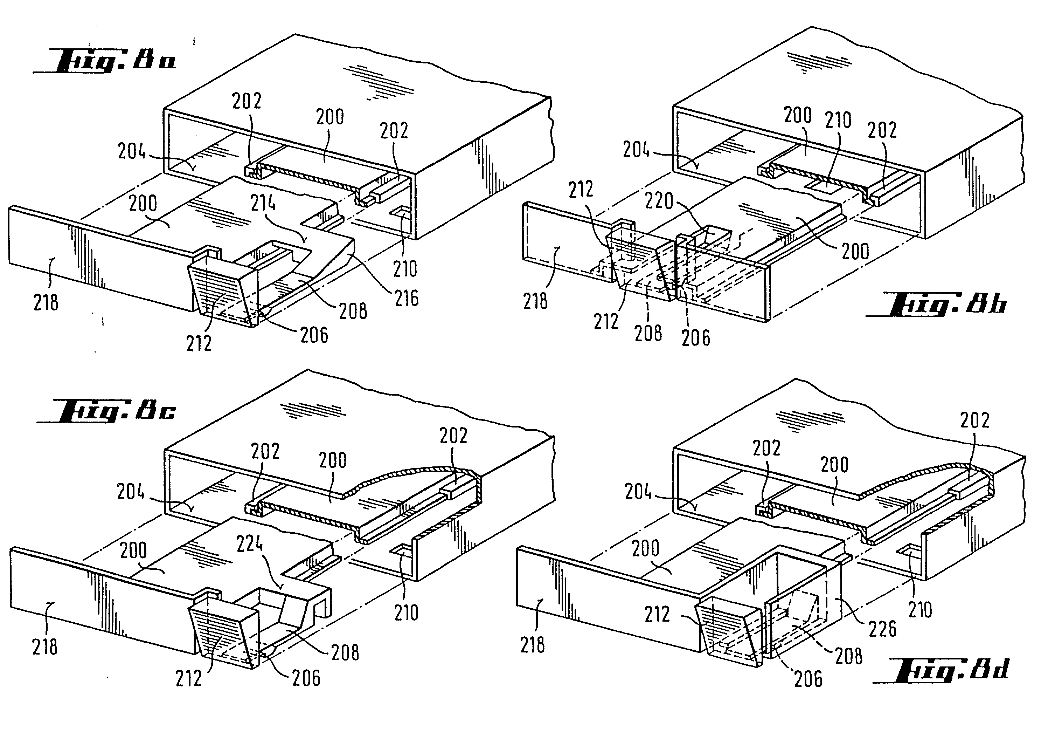

Um die erwähnte Ausrichtung der Kassette beim Einlegen zu ermöglichen, hat die Schieberrückwand die in Fig. 6 erkennbaren seitlichen trichterartigen Führungsflächen. Wie man in Fig. 5 erkennt, begrenzen die Anschläge 54 des Schiebers den Ausschubhub des Schiebers derart, daß in der äußeren Endstellung die Trichtermündung gerade etwa bündig mit der Gehäuseöffnung steht. Demgemäß wird die Kassette in die richtige Position geführt, ohne daß der Benutzer beim Einlegen besonderes Geschick aufwenden muß.

Wie man ebenfalls in Fig. 6 erkennt, erstrecken sich hier die beiden äußeren Schieberbodenplatten noch ein ganzes Stück bis hinter die Rückwand, so daß der Schieber trotz des weiten Ausschubs noch sicher geführt ist. Dies ermöglicht die Verwendung einer Verriegelungsvorrichtung, die etwas Platz in der Gehäusetiefe beansprucht.

In einen an den Schieber angeformten Käfig ist ein Steuerschieber 64 eingesetzt, der in Richtung quer zum Schieberhub verlagerbar ist; in der Ebene der Fig. 6 kann er reibungsgebremst zwischen zwei Anschlägen pendeln, in der Ebene der Fig. 5 kann er gegen die Vorspannung einer Feder (nicht gezeigt) nach oben ausgelenkt werden. Die genannte Feder spannt den Steuerschieber 64 derart vor, daß ein an ihn unten angeformter Riegel 66 gegen den Gehäuseboden drückt.

Eine Steuerkulisse 80 ist im hinteren Bereich des Gehäuses an dessen Boden angeformt, und an die Gehäuserückwand 60 ist ein Steuerkeil 78 angeformt. Der Steuerschieber hat entsprechend zugeordnete Auflaufflächen, derart, daß sein Riegel beim Einschieben des Schiebers eine in Fig. 7 strichpunktiert angedeutete Bahn durchläuft: Beim Auftreffen auf die Fläche 68 wird er zunächst seitlich verlagert, bis der Riegel 66 auf eine ansteigende Keilfläche der Kulisse trifft und gegen die Kraft seiner Vorspannfeder nach oben ausgelenkt wird, bis er über die Kulisse weggleitet und hinter ihr wieder einrastet. Dies ist zugleich die innere Endstellung des Schiebers. Läßt der Benutzer los, gleitet der Schieber längs der Fläche 72 ein Stück zurück, bis die Kulissenquerfläche 74 den Riegel 66 stoppt. Damit ist der Schieber gegen die Vorspannung seiner Ausschubfeder verriegelt. Drückt der Benutzer nun erneut auf die Schieberfrontwand, verschiebt der Keil 78 mit seiner Steuerfläche 76 den Riegel 64 vor eine zweite ansteigende Keilfläche der Kulisse 80, so daß der Riegel 66 wieder gehoben werden kann und der Schieber freigegeben wird.

Bei der Ausführungsform nach Fig. 1–4 erfolgt die Führung des Schiebers durch die beiden seitlichen Bodenplattenteile von innen her übergreifende Flügel der Schiene am Gehäuseboden. Außerdem trägt eines der beiden seitlichen Bodenplattenteile die Entriegelungstaste und den Verriegelungshaken.

Die Figuren 8a bis 8d zeigen vier Varianten einer dritten Ausführungsform, bei der der Schieberboden nur eine mittlere Bodenplatte umfaßt. Diese Bodenplatte 200 ist von zwei L-förmigen Schienen 202 am Gehäuseboden 204 übergriffen und so geführt. Die vier Varianten weisen unterschiedliche Ausgestaltungen der Ver- und Entriegelung auf; in allen Fällen ist ein Verriegelungshaken 206 an einer Blattfeder 208 vorgesehen, der in eine Ausnehmung 210 des Gehäusebodens einrastet, und eine mit der Blattfeder verbundene Entriegelungstaste 212, wobei die Teile 200, 206–212 einstückig aus Kunststoff gespritzt sind.

In der Ausführungsform nach Fig. 8a ragt von der Bodenplatte 200 seitlich eine Traverse 214 über die Schiene 202. An ihrem Ende befindet sich eine Verdickung 216, die verhindert, daß die Deformation der Blattfeder auf die Bodenplatte übertragen wird.

In der Ausführungsform nach Fig. 8b befinden sich Haken, Blattfeder und Taste mittig in der Schieberstirnwand 218. Die Blattfeder sitzt an einem verdickten Block 220, der unten an die Bodenplatte angeformt ist, so daß ihre Unterseite bündig mit dem Gehäuseboden ist.

In Fig. 8c ist eine Traverse ähnlich der Traverse 214 in Fig. 8a vorgesehen; hier hat die Traverse 224 jedoch ein biege- und torsionssteifes Hohlprofil in der Höhe des Schieberbodens. Damit der Schieber trotzdem einschiebbar ist, ist die eine Schiene 202 entsprechend kürzer ausgebildet.

Während in Fig. 8a bis 8c noch Staub zwischen Schieberstirnwand und Taste eindringen kann, ist dies bei Fig. 8d nicht möglich, weil die Taste aus einem mit der Stirnwand 218 einteiligen kastenförmigen Ansatz 226 ausgeschnitten ist, dessen Außenwand an einer inneren Schmalseitenwand des Gehäuses anliegt.

## Patentansprüche

1. Behälter zur Aufnahme von Kompaktkassetten mit einem auf einer Schmalseite offenen Gehäuse (100), in welchem ein eine Frontwand (118, 218), eine Rückwand (120) und einen beide verbindenden Boden (122/124/126, 200) aufweisender Schieber (106) gleitbeweglich geführt ist, mit einer den Schieber in eine durch Anschläge (116, 54) definierte äußere Endposition vorspannenden Federanordnung (114), und mit einer manuell auslösbaren, den Schieber gegen die Vorspannung der Federanordnung im Gehäuse haltenden Verriegelungsanordnung (142, 64/66/68/72/74/76/78, 206/208) sowie mit auf dem Schieberboden angeordneten Sperrnocken (132, 86) zum Blockieren der Bandwickelkernnaben einer eingelegten Kompaktkassette, dadurch gekennzeichnet, daß der Schieberboden einen Mittelteil (124, 200) umfaßt, auf dem die Nocken in Schieberbewegungsrichtung hintereinander angeordnet sind, daß die Länge einer Schieberführung (128/130, 202) und die Position der Anschläge derart bemessen sind, daß in der äußeren Endposition der gehäuseinnere Nocken vor der Gehäusestirnwand liegt, und daß der Schieberboden beidseits des Mittelteils je ein Seitenteil (122, 126) aufweist, die von dem Mittelteil (124) durch Führungsschlitze getrennt sind und von denen eines (126) mit einer Entriegelungstaste (142) versehen ist.

2. Behälter nach Anspruch 1, dadurch gekennzeichnet, daß die Entriegelungstaste (142) über einen Blattfederabschnitt (146) mit dem einen Seitenteil (126) verbunden ist.

3. Behälter nach Anspruch 1 oder 2, dadurch gekennzeichnet, daß die Entriegelungstaste in Wirkverbindung mit einem Verriegelungshaken (144) steht, der mittels der Taste aus einer gehäuseseitigen Ausnehmung lösbar ist.

4. Behälter nach einem der Ansprüche 1 bis 3, dadurch gekennzeichnet, daß die Schieberboden-Seitenteile (122, 126) sich über die Schieberrückwand (120) hinauserstrecken, und daß die Schieberführung auch im Bereich dieser Verlängerungen vorgesehen sind.

5. Behälter nach einem der Ansprüche 1 bis 4, dadurch gekennzeichnet, daß die Federanordnung eine zylindrische Schraubendruckfeder ist und daß das Gehäuse unter dem Schieberboden-Mittelteil (124) die Feder (114) gegen Ausknicken stützende Vorsprünge (112) aufweist.

6. Behälter zur Aufnahme von Kompaktkassetten mit einem auf einer Schmalseite offenen Gehäuse (100), in welchem ein eine Frontwand (118, 218), eine Rückwand (120) und einen beide verbindenden Boden (122/124/126, 200) aufweisender Schieber (106) gleitbeweglich geführt ist, mit einer den Schieber in eine durch Anschläge (116, 54) definierte äußere Endposition vorspannenden Federanordnung (114), und mit einer manuell auslösbaren, den Schieber gegen die Vorspannung der Federanordnung im Gehäuse haltenden Verriegelungsanordnung (142, 64/66/68/72/74/76/78, 206/208) sowie mit auf dem Schieberboden angeordneten Sperrnocken (132, 86) zum Blockieren der Bandwickelkernnaben einer eingelegten Kompaktkassetten, dadurch gekennzeichnet, daß der Schieberboden einen Mittelteil (124, 200) umfaßt, auf dem die Nocken in Schieberbewegungsrichtung hintereinander angeordnet sind, daß die Länge einer Schieberführung (128/130, 202) und die Position der Anschläge derart bemessen sind, daß in der äußeren Endposition der gehäuseinnere Nocken vor der Gehäusestirnwand liegt, und daß die Führungsmittel (128, 130) für den Schieber sich über die Schieberrückwand (120) hinaus erstrecken.

7. Behälter nach Anspruch 6, dadurch gekennzeichnet, daß der Schieberboden beidseits des Mittelteils je ein Seitenteil (122, 126) aufweist, die von dem Mittelteil (124) durch Führungsschlitze getrennt sind und von denen eines (126) mit einer Entriegelungstaste (142) versehen ist.

8. Behälter nach Anspruch 7, dadurch gekennzeichnet, daß die Entriegelungstaste (142) über einen Blattfederabschnitt (146) mit dem einen Seitenteil (126) verbunden ist.

9. Behälter nach Anspruch 7 oder 8, dadurch gekennzeichnet, daß die Entriegelungstaste in Wirkverbindung mit einem Verriegelungshaken (144) steht, der mittels der Taste aus einer gehäuseseitigen Ausnehmung lösbar ist.

10. Behälter nach einem der Ansprüche 6 bis 9, dadurch gekennzeichnet, daß die Federanordnung eine zylindrische Schraubendruckfeder ist und daß das Gehäuse unter dem Schieberboden-Mittelteil (124) die Feder (114) gegen Ausknicken stützende Vorsprünge (112) aufweist.

11. Behälter zur Aufnahme von Kompaktkassetten mit einem auf einer Schmalseite offenen Gehäuse (100), in welchem ein eine Frontwand (118, 218), eine Rückwand (120) und einen beide verbindenden Boden (122/124/126, 200) aufweisender Schieber (106) gleitbeweglich geführt ist, mit einer den Schieber in eine durch Anschläge (116, 54) definierte äußere Endposition vorspannenden Federanordnung (114), und mit einer manuell auslösbaren, den Schieber gegen die Vorspannung der Federanordnung im Gehäuse haltenden Verriegelungsanordnung (142, 64/66/68/72/74/76/78, 206/208) sowie mit auf dem Schieberboden angeordneten Sperrnocken (132, 86) zum Blockieren der Bandwickelkernnaben einer eingelegten Kompaktkassette, dadurch gekennzeichnet, daß der Schieberboden einen Mittelteil (124, 200) umfaßt, auf dem die Nocken in Schieberbewegungsrichtung hintereinander angeordnet sind, daß die Länge einer Schieberführung (128/130, 202) und die Position der Anschläge derart bemessen sind, daß in der äußeren Endposition der gehäuseinnere Nocken vor der Gehäusestirnwand liegt, und daß das Schieberboden-Mittelteil sich in Ausschubrichtung des Schiebers erstreckende Versteifungsrippen aufweist.

12. Behälter nach Anspruch 11, dadurch gekennzeichnet, daß das Schieberboden-Mittelteil ein umgekehrtes U-Profil aufweist.

13. Behälter nach Anspruch 11 oder 12, dadurch gekennzeichnet, daß das Gehäuse im Bereich zwischen den Rippen eine Federführung (112) für die Federanordnung (114) aufweist.

14. Behälter nach Anspruch 11, dadurch gekennzeichnet, daß an den freien Enden zweier äußerer Versteifungsrippen Führungskanten angeformt sind, die von gehäuseseitigen Führungsschienen übergriffen sind.

15. Behälter nach Anspruch 11, dadurch gekennzeichnet, daß beidseits des Schieberboden-Mittelteils Seitenteile vorgesehen sind, die ebenfalls mit Versteifungsrippen versehen sind.

16. Behälter nach Anspruch 11, dadurch gekennzeichnet, daß an das Schieberboden-Mittelteil eine Entriegelungstaste (212) angeformt ist.

17. Behälter zur Aufnahme von Kompaktkassetten mit einem auf einer Schmalseite offenen Gehäuse (100), in welchem ein eine Frontwand (118, 218), eine Rückwand (120) und einen beide verbindenden Boden (122/124/126, 200) aufweisender Schieber (106) gleitbeweglich geführt ist, mit einer den Schieber in eine durch Anschläge (116, 54) definierte äußere Endposition vorspannenden Federanordnung (114), und mit einer manuell auslösbaren, den Schieber gegen die Vorspannung der Federanordnung im Gehäuse haltenden Verriegelungsanordnung (142, 64/66/68/72/74/76/78, 206/208) sowie mit auf dem Schieberboden angeordneten Sperrnocken (132, 86) zum Blockieren der Bandwickelkernnaben einer eingelegten Kompaktkassette, dadurch gekennzeichnet, daß der Schieberboden einen Mittelteil (124, 200) umfaßt, auf dem die Nocken in Schieberbewegungsrichtung hintereinander angeordnet sind, und das ein erstes Kassettenabstützniveau definiert, daß die Länge einer Schieberführung (128/130, 202) und die Position der Anschläge derart bemessen sind, daß in der äußeren Endposition der gehäuseinnere Nocken vor der Gehäusestirnwand liegt, und daß seitlich des Mittelteils (124) ein Schieberboden-Seitenteil (122, 126) vorgesehen ist, das ein gegenüber dem Mittelteil niedrigeres zweites Kassettenabstützniveau entsprechend der Kopfspiegelverdickung bei Kompaktkassette definiert.

18. Behälter zur Aufnahme von Kompaktkassetten mit einem auf einer Schmalseite offenen Gehäuse (100), in welchem ein eine Frontwand (118, 218), eine Rückwand (120) und einen beide verbindenden Boden (122/124/126, 200) aufweisender Schieber (106) gleitbeweglich geführt ist, mit einer den Schieber in eine durch Anschläge (116, 54) definierte äußere Endposition vorspannenden Federanordnung (114), und mit einer manuell auslösbaren, den Schieber gegen die Vorspannung der Federanordnung im Gehäuse haltenden Verriegelungsanordnung (142, 64/66/68/72/74/76/78, 206/208) sowie mit auf dem Schieberboden angeordneten Sperrnocken (132, 86) zum Blockieren der Bandwickelkernnaben einer eingelegten Kompaktkassette, dadurch gekennzeichnet, daß der Schieberboden einen Mittelteil (124, 200) umfaßt, auf dem die Nocken in Schieberbewegungsrichtung hintereinander angeordnet sind, daß die Länge einer Schieberführung (128/130, 202) und die Position der Anschläge derart bemessen sind, daß in der äußeren Endposition der gehäuseinnere Nocken vor der Gehäusestirnwand liegt, und daß seitlich des Mittelteils (124) ein Schieberboden-Seitenteil (122, 126) vorgesehen ist, das ein Abstützniveau entsprechend der Dicke einer Kompaktkassette im Bereich von deren Kopfspiegel definiert, während das Mittelteil und/oder ein zweites Seitenteil ein Abstützniveau entsprechend der geringeren Dicke einer Kompaktkassette definieren.

19. Behälter nach Anspruch 18, dadurch gekennzeichnet, daß sich das Mittelteil und/oder das zweite Seitenteil auf ihrer dem erstgenannten Seitenteil abgelegenen Seite über eine Rippe am Gehäuseboden abstützen.

20. Behälter nach Anspruch 18 oder 19, dadurch gekennzeichnet, daß Schieberführungsmittel (128, 130) außerhalb des Bereichs des niedrigeren Seitenteils vorgesehen sind.

## Claims

1. A container for accommodating compact cassettes having a housing (100) which is open at one narrow side, in which a slider member (106) having a front wall (118, 218), a rear wall (120) and a base (122/124/126, 200) connecting the two is arranged so that it can slide, having a spring arrangement (114) which biases the slider member into an outer end position defined by stops (116, 54), and having a manually releasable locking arrangement (142, 64/66/68/72/74/76/78, 206/208) which holds the slider member in the housing against the bias of the spring arrangement, and having retaining projections (132, 86) arranged on the base of the slider member for locking the tape-winding core-hubs of an inserted compact cassette, characterized in that the base of the slider member comprises a middle part (124, 200) on which the projections are arranged one behind the other in the direction of movement of the slider member, the length of a slider member guide means (128/130, 202) and the position of the stops are such that in the outer end position the projection that is nearer to the housing lies in front of the front end wall of the housing, and on each side of its middle part the base of the slider member has a side part (122, 126), the side parts being separated from the middle part (124) by guide slots, and one of the side parts (124) being provided with an unlocking button (142).

2. A container according to claim 1, characterized in that the unlocking button (142) is connected by way of a leaf spring portion (146) to the one side part (126).

3. A container according to claim 1 or 2, characterized in that the unlocking button is in operative connection with a locking hook (144) which is releasable by means of the button from a recess in the housing.

4. A container according to one of claims 1 to 3, characterized in that the side parts (122, 126) of the slider member base extend beyond the slider member rear wall (120) and the slider member guide means are also provided in the region of these extensions.

5. A container according to one of claims 1 to 4, characterized in that the spring arrangement is a cylindrical helical compression spring and beneath the middle part (124) of the slider member base the housing has projections (112) supporting the spring (114) against buckling.

6. A container for accommodating compact cassettes having a housing (100) which is open at one narrow side, in which a slider member (106) having a front wall (118, 218), a rear wall (120) and a base (122/124/126, 200) connecting the two is arranged so that it can slide, having a spring arrangement (114) which biases the slider member into an outer end position defined by stops (116, 54) and having a manually releasable locking arrangement (142, 64/66/68/72/74/76/78, 206/208) which holds the slider member in the housing against the bias of the spring arrangement, and having retaining projections (132, 86) arranged on the base of the slider member for locking the tape-winding core-hubs of an inserted compact cassette, characterized in that the base of the slider member comprises a middle part (124, 200) on which the projections are arranged one behind the other in the direction of movement of the slider member, the length of a slider member guide means (128/130, 202) and the position of the stops are such that in the outer end position the projection that is nearer to the housing lies in front of the front end wall of the housing, and the guide means (128, 130) for the slider member extend beyond the slider member rear wall (120).

7. A container according to claim 6, characterized in that the slider member base has a side part (122, 126) on each side of the middle part, the side parts being separated from the middle part (124) by guide slots and one of the side parts (126) being provided with an unlocking button (142).

8. A container according to claim 7, characterized in that the unlocking button (142) is connected by way of a leaf spring portion (146) to the one side part (126).

9. A container according to claim 7 or 8, characterized in that the unlocking button is in operative connection with a locking hook (144) which is releasable by means of the button from a recess in the housing.

10. A container according to one of claims 6 to 9, characterized in that the spring arrangement is a cylindrical helical compression spring and beneath the middle part (124) of the slider member base the housing has projections (112) supporting the spring (114) against buckling.

11. A container for accommodating compact cassettes having a housing (100) which is open at one narrow side, in which a slider member (106) having a front wall (118, 218), a rear wall (120) and a base (122/124/126, 200) connecting the two is arranged so that it can slide, having a spring arrangement (114) which biases the slider member into an outer end position defined by stops (116, 54) and having a manually releasable locking arrangement (142, 64/66/68/72/74/76/78, 206/208) which holds retains the slider member in the housing against the bias of the spring arrangement, and having retaining projections (132, 86) arranged on the base of the slider member for locking the tape-winding core-hubs of an inserted compact cassette, characterized in that the base of the slider member comprises a middle part (124, 200) on which the projections are arranged one behind the other in the direction of movement of the slider member, the length of a slider member guide means (128/130, 202) and the position of the stops are such that in the outer end position the projection that is nearer to the housing lies in front of the front end wall of the housing, and the middle part of the slider member base has reinforcing ribs extending in the ejection direction of the slider member.

12. A container according to claim 11, characterized in that the middle part of the slider member base has an inverted U-shaped profile.

13. A container according to claim 11 or 12, characterized in that in the region between the ribs the housing has a resilient guide means (112) for the spring arrangement (114).

14. A container according to claim 11, characterized in that integrally with the free ends of two outer reinforcing ribs there are formed guide edges which are overlapped by guide rails of the housing.

15. A container according to claim 11, characterized in that on each side of the middle part of the slider member base there are provided side parts which are likewise provided with reinforcing ribs.

16. A container according to claim 11, characterized in that integrally with the middle part of the slider member base there is formed an unlocking button (212).

17. A container for accommodating compact cassettes having a housing (100) which is open at one narrow side, in which a slider member (106) having a front wall (118, 218), a rear wall (120) and a base (122/124/126, 200) connecting the two is arranged so that it can slide, having a spring arrangement (114) which biases the slider member into an outer end position defined by stops (116, 54) and having a manually releasable locking arrangement (142, 64/66/68/72/74/76/78, 206/208) which holds the slider member in the housing against the bias of the spring arrangement, and having retaining projections (132, 86) arranged on the base of the slider member for locking the tape-winding core-hubs of an inserted compact cassette, characterized in that the base of the slider member comprises a middle part (124, 200) on which the projections are arranged one behind the other in the direction of movement of the slider member and which defines a first cassette supporting level, the length of a slider member guide means (128/130, 202) and the position of the stops are such that in the outer end position the projection that is nearer to the housing lies in front of the front end wall of the housing, and laterally with respect to the middle part (124) there is provided a side part (122, 126) of the slider member base, which side part defines a second cassette supporting level that is lower than the middle part corresponding to the thickened portion of the face which is opposed to the tape head in compact cassettes.

18. A container for accommodating compact cassettes having a housing (100) which is open at one narrow side, in which a slider member (106) having a front wall (118, 218), a rear wall (120) and a base (122/124/126, 200) connecting the two is arranged so that it can slide, having a spring arrangement (114) which biases the slider member into an outer end position defined by stops (116, 54) and having a manually releasable locking arrangement (142, 64/66/68/72/74/76/78, 206/208) which holds the slider member in the housing against the bias of the spring arrangement, and having retaining projections (132, 86) arranged on the base of the slider member for locking the tape-winding core-hubs of an inserted compact cassette, characterized in that the base of the slider member comprises a middle part (124, 200) on which the projections are arranged one behind the other in the direction of movement of the slider member and which defines a first cassette supporting level, the length of a slider member guide means (128/130, 202) and the position of the stops are such that in the outer end position the projection that is nearer to the housing lies in front of the front end wall of the housing, and laterally with respect to the middle part (124) there is provided a side part (122, 126) of the slider member base, which side part defines a supporting level corresponding to the thickness of a compact cassette in the region of the face which is opposed to the tape head, while the middle part and/or as second side part define a supporting level corresponding to the smaller thickness of a compact cassette.

19. A container according to claim 18, characterized in that the middle part and/or the second side part engage the housing base on their side remote from the first side part by way of a rib.

20. A container according to claim 18 or 19, characterized in that slider member guide means (128, 130) are provided outside the region of the lower side part.

**Revendications**

1. Boîtier destiné à loger des cassettes compactes, comportant un coffret (100), qui est ouvert sur un petit côté et dans lequel un tiroir (106) comportant une paroi avant (118, 218), une paroi arrière (120) et un fond (122/124/126, 200) reliant ces deux parois, est guidé de manière à être déplaçable par glissement, et un dispositif à ressort (114) sollicitant sous l'action d'une précontrainte le tiroir dans une position extérieure d'extrémité définie par des butées (116, 54), et un dispositif de verrouillage (142, 64/66/68/72/74/76/78, 206/208), qui peut être déclenché manuellement et retient le tiroir dans le coffret à l'encontre de la précontrainte du dispositif à ressort, ainsi que des ergots de blocage (132, 86) disposés sur le fond du tiroir et servant à bloquer les moyeux de bobinage de la bande d'une cassette compacte insérée, caractérisé en ce que le fond du tiroir comporte une partie médiane (124, 200), sur laquelle les ergots sont disposés l'un derrière l'autre dans la direction de déplacement du tiroir, en ce que la longueur d'un guide (128/130, 202) du tiroir et la position des butées sont choisies de manière que, dans la position extérieure d'extrémité, l'ergot présent à l'intérieur du coffret est situé en avant de la paroi frontale de ce dernier, et en ce que le fond du tiroir comporte, des deux côtés de la partie médiane, des parties latérales respectives (122, 126) qui sont séparées de la partie médiane (124) par des fentes de guidage et dont l'une (126) est pourvue d'une touche de déverrouillage (142).

2. Boîtier selon la revendication 1, caractérisé en ce que la touche de déverrouillage (142) est reliée par l'intermédiaire d'une section de ressort en forme de lame (146) à l'une des parties latérales (126).

3. Boîtier selon la revendication 1 ou 2, caractérisé en ce que la touche de déverrouillage est reliée selon une liaison active à un crochet de verrouillage (144), qui peut être dégagé du logement ménagé dans le coffret, à l'aide de la touche.

4. Boîtier selon l'une des revendications 1 à 3, caractérisé en ce que les éléments latéraux (122, 126) du fond du tiroir s'étendend au-delà de la paroi arrière (120) du tiroir et en ce que les guides du tiroir sont également prévus au niveau de ces prolongements.

5. Boîtier selon l'une des revendications 1 à 4, caractérisé en ce que le dispositif à ressort est un ressort hélicoïdal cylindrique de pression et en ce que le coffret comporte, au-dessous de la partie médiane (124) du fond du tiroir, des parties saillantes (112) soutenant le ressort (114) pour qu'il ne se déforme pas.

6. Boîtier destiné à recevoir des cassettes compactes, comportant un coffret (100), qui est ouvert sur un petit côté et dans lequel un tiroir (106) comportant une paroi avant (118, 218), une paroi arrière (120) et un fond (122/124/126, 200) reliant ces deux parois, est guidé de manière à être déplaçable par glissement, et un dispositif à ressort (114) sollicitant sous l'action d'une précontrainte le tiroir dans une position extérieure d'extrémité définie par des butées (116, 54), et un dispositif de verrouillage (144, 64/66/68/72/74/76/78, 206/208), qui peut être déclenché manuellement et retient le tiroir dans le coffret à l'encontre de la précontrainte du dispositif à ressort, ainsi que des ergots de blocage (132, 86) disposés sur le fond du tiroir et servant à bloquer les moyeux de bobinage de la bobine d'une cassette compacte insérée, caractérisée en ce que le fond du tiroir comporte une partie médiane (124, 200), sur laquelle les ergots sont disposés l'un derrière l'autre dans la direction de déplacement du tiroir, en ce que la longueur d'un guide (128/130, 202) du tiroir et la position des butées sont choisies de manière que, dans la position extérieure d'extrémité, l'ergot présent à l'intérieur du coffret est situé en avant de la paroi frontale du boîtier et en ce que les moyens de guidage (128, 130) pour le tiroir s'étendent au-delà de la paroi arrière (120) du tiroir.

7. Boîtier selon la revendication 6, caractérisé en ce que le fond du tiroir comporte, des deux côtés de la partie médiane, des parties latérales respectives (122, 126), qui sont séparées de la partie médiane (124) par des fentes de guidage et dont l'une (126) est pourvue d'une touche de déverrouillage (142).

8. Boîtier selon la revendication 7, caractérisé en ce que la touche de déverrouillage (142) est reliée par l'intermédiaire d'une section de ressort en forme de lame (146) à l'une des parties latérales (126).

9. Boîtier selon la revendication 7 ou 8, caractérisé en ce que la touche de déverrouillage est reliée selon une liaison active à un crochet de verrouillage (144), qui peut être dégagé d'un évidement ménagé dans le coffret, à l'aide de la touche.

10. Boîtier selon l'une des revendications 6 à 9, caractérisé en ce que le dispositif à ressort est un ressort hélicoïdal cylindrique de pression et en ce que le coffret comporte, au-dessous de la partie médiane (124) du fond du tiroir, des parties saillantes (112) soutenant le ressort (114) pour qu'il ne se déforme pas.

11. Boîtier destiné à loger des cassettes compactes, comportant un coffret (100), qui est ouvert sur un petit côté et dans lequel un tiroir (106) comportant une paroi avant (118, 218), une paroi arrière (120) et un fond (122/124/126, 200) reliant ces deux parois, est guidé de manière à être déplaçable par glissement, et un dispositif à ressort (114) sollicitant sous l'action d'une précontrainte le tiroir dans une position extérieure d'extrémité définie par des butées (116, 54), et un dispositif de verrouillage (142, 64/66/68/72/74/76/78, 206/208), qui peut être déclenché manuellement et retient le tiroir dans le coffret à l'encontre de la précontrainte du dispositif à ressort, ainsi que des ergots de blocage (132, 86) disposés sur le fond du tiroir et servant à bloquer les moyeux de bobinage de la bande d'une cassette compacte insérée, caractérisé en ce que le fond du tiroir comporte une partie médiane (124, 200), sur laquelle les ergots sont disposés l'un derrière l'autre dans la direction de déplacement du tiroir, en ce que la longueur d'un guide (128/130, 202) du tiroir et la position des butées sont choisies de manière que, dans la position extérieure d'extrémité, l'ergot présent à l'intérieur du coffret est situé devant la paroi frontale du boîtier et en ce que la partie médiane du fond du tiroir comporte des nervures de renforcement s'étendant dans la direction d'extraction du tiroir.

12. Boîtier selon la revendication 11, caractérisé en ce que la partie médiane du fond du tiroir possède un profil en forme de U renversé.

13. Boîtier selon la revendication 11 ou 12, caractérisé en ce que le coffret comporte, dans la zone située entre les nervures, un guide de ressort (112) pour le dispositif à ressort (114).

14. Boîtier selon la revendication 11, caractérisé en ce que des arêtes de guidage, par-dessus lesquelles s'engagent des rails de guidage ménagés sur le coffret, sont formées par façonnage sur les extrémités libres des deux nervures de renforcement extérieures.

15. Boîtier selon la revendication 11, caractérisé en ce qu'il est prévu, des deux côtés de la partie médiane du fond du tiroir, des parties latérales, qui sont également pourvues de nervures de renforcement.

16. Boîtier selon la revendication 11, caractérisé en ce qu'une touche de déverrouillage (212) est formée par façonnage sur la partie médiane du fond du tiroir.

17. Boîtier destiné à loger des cassettes compactes comportant un coffret (100), qui est ouvert sur un petit côté et dans lequel un tiroir (106) comportant une paroi avant (118, 218), une paroi arrière (120) et un fond (122/124/126, 200) reliant ces deux parois, est guidé de manière à être déplaçable par glissement, et un dispositif à ressort (114) sollicitant sous l'action d'une précontrainte le tiroir dans une position extérieure d'extrémité définie par des butées (116, 54), et un dispositif de verrouillage (142, 64/66/68/72/74/76/78, 206/208), qui peut être déclenché manuellement et retient le tiroir dans le boîtier à l'encontre de la précontrainte du dispositif à ressort, ainsi que des ergots de blocage (132, 86) disposés sur le fond du tiroir et servant à bloquer les moyeux de bobinage de la bande d'une cassette compacte insérée, caractérisé en ce que le fond du tiroir comporte une partie médiane (124, 200), sur laquelle les ergots sont disposés l'un derrière l'autre dans la direction de déplacement et qui définit un premier niveau d'appui de la cassette, en ce que la longueur d'un guide (128/130, 202) du tiroir et la position des butées sont choisies de telle sorte que, dans la position extérieure d'extrémité, l'ergot présent à l'intérieur du boîtier est située devant la paroi frontale du coffret, et en ce qu'il est prévu, latéralement par rapport à la partie médiane (124), une partie latérale (122, 126) du fond du tiroir, qui définit un second niveau de support de la cassette, qui est plus bas que la partie médiane, correspondant à l'épaississement du miroir de tête dans des cassettes compactes.

18. Boîtier destiné à loger des cassettes compactes, comportant un coffret (100), qui est ouvert sur un petit côté et dans lequel un tiroir (106) comportant une paroi avant (118, 218), une paroi arrière (120) et un fond (122/124/126, 200) reliant ces deux parois, est guidé de manière à être déplaçable par glissement, et un dispositif à ressort (114) sollicitant sous l'action d'une précontrainte le tiroir dans une position extérieure d'extrémité définie par des butées (116, 54), et un dispositif de verrouillage (142, 64/66/68/72/74/76/78, 206/208), qui peut être déclenché manuellement et retient le tiroir dans le coffret à l'encontre de la précontrainte du dispositif à ressort, ainsi que des ergots de blocage (132, 86) disposés sur le fond du tiroir et servant à bloquer les moyeux de bobinage de la bande d'une cassette compacte insérée, caractérisé en ce que le fond du tiroir comporte une partie médiane (124, 200), sur laquelle les ergots sont disposés l'un derrière l'autre dans la direction de déplacement du tiroir, en ce que la longueur d'un guide (128/130, 202) du tiroir et la position des butées sont choisies de manière que, dans la position extérieure d'extrémité, l'ergot présent à l'intérieur du coffret et situé en avant de la paroi avant du coffret, et en ce qu'il est prévu, latéralement par rapport à la partie médiane (124), une partie latérale (122, 126) du fond du tiroir, qui définit un niveau de support correspondant à l'épaisseur d'une cassette compacte dans la zone de son miroir de tête, tandis que la partie médiane et/ou un second élément latéral définissent un niveau de support correspondant à l'épaisseur plus faible d'une cassette compacte.

19. Boîtier selon la revendication 18, caractérisé en ce que la partie médiane et/ou la seconde partie latérale prennent appui, sur leur face tournée à l'opposé de la partie latérale indiquée en premier lieu, par l'intermédiaire d'une nervure sur le fond du coffret.

20. Boîtier selon la revendication 18 ou 19, caractérisé en ce que des moyens (128, 130) de guidage du tiroir sont prévus à l'extérieur de la zone de la partie latérale la plus basse.

*Fig. 1a*

*Fig. 1b*

*Fig. 1*

EP 0 139 164 B1

Fig. 4.

Fig. 2

Fig. 3

Fig. 5

Fig. 6

Fig. 7

Fig. 8a

Fig. 8b

Fig. 8c

Fig. 8d